(19) Europäisches Patentamt

European Patent Office

Office européen des brevets

(11) **EP 1 346 508 B1**

(12) **FASCICULE DE BREVET EUROPEEN**

(45) Date de publication et mention
de la délivrance du brevet:
**28.09.2005 Bulletin 2005/39**

(21) Numéro de dépôt: **01994907.2**

(22) Date de dépôt: **19.12.2001**

(51) Int Cl.$^7$: **H04L 9/06**

(86) Numéro de dépôt international:
**PCT/FR2001/004069**

(87) Numéro de publication internationale:
**WO 2002/052782 (04.07.2002 Gazette 2002/27)**

(54) **CIRCUIT LOGIQUE A POLARITES INTERNES VARIABLES**

LOGISCHER SCHALTKREIS MIT VARIABLEN INTERNEN POLARITÄTEN

LOGIC CIRCUIT WITH VARIABLE INTERNAL POLARITIES

(84) Etats contractants désignés:
**DE FR GB IT**

(30) Priorité: **26.12.2000 FR 0017002**

(43) Date de publication de la demande:
**24.09.2003 Bulletin 2003/39**

(73) Titulaire: **STMicroelectronics S.A.**
**92120 Montrouge (FR)**

(72) Inventeur: **WUIDART, Sylvie**
**F-83910 Pourrières (FR)**

(74) Mandataire: **Marchand, André**
**OMNIPAT,**
**24 Place des Martyrs de la Résistance**
**13100 Aix-en-Provence (FR)**

(56) Documents cités:
**DE-A- 19 936 918          US-A- 4 968 903**

• **GOUBIN L ET AL: "DES AND DIFFERENTIAL POWER ANALYSIS THE DUPLICATION METHOD" CRYPTOGRAPHIC HARDWARE AND EMBEDDED SYSTEMS, 1ST INTERNATIONAL WORKSHOP, CHES'99, WORCESTER, MA, AUG. 12 - 13, 1999 PROCEEDINGS, LECTURE NOTES IN COMPUTER SCIENCE, BERLIN: SPRINGER, DE, vol. 1717, 12 août 1999 (1999-08-12), pages 158-172, XP001001354 ISBN: 3-540-66646-X**

**Description**

La présente invention concerne les circuits intégrés sécurisés et un procédé de brouillage du fonctionnement de circuits logiques présents dans de tels circuits intégrés.

La présente invention concerne notamment les circuits intégrés agencés dans les cartes à puce, les étiquettes électroniques, les badges électroniques, et de façon générale dans les objets portables électroniques sécurisés.

De façon classique, les transactions électroniques réalisées au moyen d'une carte à puce sont sécurisées grâce à une procédure d'authentification de la carte à puce faisant intervenir un algorithme de cryptographie. Au cours d'une telle procédure d'authentification, le terminal sollicité pour la transaction envoie à la carte à puce un code aléatoire. La carte à puce doit répondre au terminal en produisant un code d'authentification qui est la transformée du code aléatoire par l'algorithme de cryptographie. Le terminal calcule de son côté la transformée du code aléatoire et compare le résultat obtenu avec celui renvoyé par la carte. Si le code d'authentification renvoyé par la carte est valable, la transaction est autorisée.

Dans le circuit intégré d'une carte à puce, un tel algorithme de cryptographie est généralement exécuté par un circuit à logique câblée, ou co-processeur de cryptographie, auquel est attribué une clé secrète stockée dans une zone protégée de la mémoire du circuit intégré. Il est essentiel de garantir une protection absolue de cette clé secrète car les algorithmes de cryptographie mis en oeuvre dans les procédures d'authentification sont en soi connus et seule la clé secrète garantit l'inviolabilité de la procédure d'authentification.

Or, ces dernières années, les techniques de piratage de circuits intégrés ont considérablement évolué et les fraudeurs disposent aujourd'hui de méthodes d'analyses sophistiquées permettant de déceler les clés secrètes des algorithmes de cryptographie par observation de certains signaux logiques et/ou électriques intervenant dans le fonctionnement d'un circuit intégré. Parmi ces méthodes, certaines sont basées sur une observation du courant consommé par un circuit intégré pendant l'exécution d'opérations confidentielles. On distingue notamment les méthodes d'analyse du type SPA ("Single Power Analysis") et les méthodes d'analyse du type DPA ("Differential Power Analysis"), ces dernières étant particulièrement dangereuses en ce qu'elles permettent de découvrir une clef secrète sans qu'il soit nécessaire d'observer les données circulant sur le bus de données du circuit intégré. D'autres méthodes de piratage sont mises en oeuvre au moyen de sondes électriques (méthodes dites de "probing") et sont basées sur une observation des signaux logiques apparaissant dans les circuits logiques, notamment dans les circuits de cryptographie. A cet effet, des orifices de faibles dimensions permettant d'accéder aux noeuds des circuits logiques sont pratiqués dans la plaquette du circuit intégré. Ces orifices sont ensuite remplis d'une matière conductrice pour former à la surface du circuit intégré des zones de contact à partir desquelles la polarité des signaux logiques peut être observée.

Pour contrer ces méthodes de piratage, on connaît diverses contre-mesures consistant par exemple à prévoir un signal d'horloge aléatoire, à utiliser des codes factices, à masquer les variations de la consommation électrique des circuits logiques au moyen de générateurs de courant, à brouiller la consommation électrique de ces circuits au moyen de générateurs de bruit, etc..

Quelques exemples de méthodes contre le piratage du type DPA sont divulgués par les documents DE 19 936 918 et Goubin et al.: DES and differential power analysis", lecture notes in Computer science, vol. 1717, 12 août 1999, pages 158-172, Springer, Berlin.

Toutefois, il est connu que chaque nouvelle méthode anti-piratage imaginée finit généralement par être contrée par les fraudeurs, qui disposent à cet effet de puissants moyens de calcul et d'analyse. Généralement, diverses méthodes anti-piratage doivent ainsi être combinées afin d'assurer une protection plus efficace.

La présente invention a pour objectif de prévoir un procédé permettant de brouiller le fonctionnement d'un circuit intégré, notamment un circuit logique exécutant un algorithme de cryptographie. Un tel procédé est recherché en tant que moyen supplémentaire permettant de lutter.contre le piratage, et est destiné à être combiné, si nécessaire, avec les autres procédés anti-piratage connus, pour améliorer la sécurité offerte par les circuits intégrés sécurisés.

Cet objectif est atteint par un circuit logique prévu pour exécuter une fonction logique à N entrées de données et M sorties de données, N étant au moins égal à 2 et M au moins égal à 1, comprenant des portes logiques et/ou des transistors agencés pour exécuter la fonction logique au moins de deux manières différentes, la manière selon laquelle la fonction logique est exécutée étant déterminée par la valeur d'un signal de sélection de fonction appliqué au circuit logique.

Ainsi, pour des données identiques appliquées à l'entrée du circuit logique et des valeurs différentes du signal de sélection de fonction, les polarités de certains noeuds internes du circuit logique et/ou la consommation électrique du circuit logique ne sont pas identiques.

Selon un mode de réalisation, le circuit logique comprend un bloc logique comprenant N entrées reliées aux entrées de données du circuit logique et M sorties reliées aux sorties de données du circuit logique, le bloc logique étant agencé pour exécuter une première fonction logique ou une seconde fonction logique selon la valeur du signal de sélection de fonction, et des moyens pour inverser les données appliquées au bloc logique et pour inverser les données délivrées par le bloc logique, lorsque le signal de sélection présente une valeur déterminée.

Selon un mode de réalisation, les moyens pour inverser les données appliquées comprennent des portes OU EXCLUSIF recevant sur une entrée le signal de sélection de fonction.

Selon un mode de réalisation, le circuit logique comprend des portes logiques exécutant la fonction NON ET lorsque le signal de sélection de fonction présente une première valeur logique et la fonction NON OU lorsque le signal de sélection de fonction présente une deuxième valeur logique.

Selon un mode de réalisation, le circuit logique est relié à un générateur de signal aléatoire agencé pour délivrer un signal de sélection de fonction aléatoire.

Selon un mode de réalisation, la fonction logique est une fonction de cryptographie.

La présente invention concerne également un circuit de cryptographie, comprenant une pluralité de blocs de cryptographie comprenant chacun un circuit logique selon l'invention.

Selon un mode de réalisation, le circuit de cryptographie est relié à un générateur de signal aléatoire agencé pour appliquer à chaque bloc de cryptographie un signal de sélection de fonction aléatoire dont la valeur est indépendante du signal de sélection de fonction appliqué aux autres blocs de cryptographie.

La présente invention concerne également un circuit intégré sécurisé comprenant une pluralité de circuits logiques selon l'invention et des moyens pour appliquer aux circuits logiques un signal de sélection de fonction de type aléatoire dont la valeur est modifiée de façon aléatoire au moins après chaque remise à zéro du circuit intégré.

Selon un mode de réalisation, le circuit intégré comprend une unité centrale de microprocesseur.

Selon un mode de réalisation, le circuit intégré est agencé sur un support portable pour former une carte à puce ou tout autre objet électronique portable équivalent.

La présente invention concerne également une porte logique comprenant N entrées de données et une sortie, un premier groupe de transistors agencés pour exécuter une première fonction logique, un deuxième groupe de transistors agencés pour exécuter une seconde fonction logique, et des moyens de sélection de fonction agencés pour recevoir un signal de sélection de fonction et valider à la sortie de la porte logique l'une ou l'autre des deux fonctions logiques selon la valeur du signal de sélection de fonction.

Selon un mode de réalisation, les moyens de sélection de fonction comprennent des transistors agencés pour court-circuiter des transistors affectés à l'exécution de l'une ou l'autre des deux fonctions, selon la valeur du signal de sélection de fonction.

Selon un mode de réalisation, les moyens de sélection de fonction comprennent des transistors agencés pour couper des chemins de conduction passant par des transistors affectés à l'exécution de l'une ou l'autre des deux fonctions, selon la valeur du signal de sélection.

Selon un mode de réalisation, la porte logique comprend deux entrées.

Selon un mode de réalisation, la première fonction logique est la fonction NON ET et la deuxième fonction logique est la fonction NON OU.

La présente invention concerne également un circuit logique comprenant une pluralité de portes logiques selon l'invention, et une entrée pour recevoir un signal de sélection de fonction appliqué aux portes logiques.

La présente invention concerne également un procédé de brouillage du fonctionnement d'un circuit logique prévu pour exécuter une fonction logique à N entrées de données et M sorties de données, N étant au moins égal à 2 et M au moins égal à 1, comprenant une étape consistant à prévoir dans le circuit logique des portes logiques et/ou des transistors agencés pour exécuter la fonction logique au moins de deux manières différentes, la manière selon laquelle la fonction logique est exécutée étant déterminée par la valeur d'un signal de sélection de fonction appliqué au circuit logique, une étape consistant à appliquer au circuit logique un signal de sélection de fonction aléatoire, et une étape consistant à rafraîchir le signal de sélection de fonction à des instants déterminés, de manière à brouiller le fonctionnement du circuit logique.

Selon un mode de réalisation, le procédé comprend les étapes consistant à prévoir, dans le circuit logique, un bloc logique comprenant N entrées reliées aux entrées de données du circuit logique et M sorties reliées aux sorties de données du circuit logique, le bloc logique étant agencé pour exécuter une première fonction logique ou une seconde fonction logique selon la valeur du signal de sélection de fonction, et des portes logiques agencées pour inverser les données appliquées au bloc logique et pour inverser les données délivrées par le bloc logique lorsque le signal de sélection présente une valeur déterminée.

Selon un mode de réalisation, le bloc logique est réalisé au moyen de portes logiques exécutant la fonction NON ET lorsque le signal de sélection de fonction présente une première valeur logique et la fonction NON OU lorsque le signal de sélection de fonction présenté une deuxième valeur logique.

Ces objets, caractéristiques et avantages ainsi que d'autres de la présente invention seront exposés plus en détail dans la description suivante du procédé selon l'invention et d'exemples de circuits logiques à polarité variable selon l'invention, faite à titre non limitatif en relation avec les figures jointes parmi lesquelles :

- la figure 1 est une représentation schématique d'une porte logique à polarité variable selon l'invention,
- la figure 2 est un schéma électrique illustrant un mode de réalisation de la porte logique de la figure 1,

- la figure 3 représente sous forme de blocs un circuit logique à polarité variable selon l'invention,
- la figure 4 représente un exemple de circuit logique à polarité variable selon l'invention,
- les figures 5A et 5B représentent deux fonctions logiques exécutées par le circuit à polarité variable de la figure 4 selon la valeur d'un signal de sélection de fonction appliqué au circuit logique,
- les figures 6A et 6B représentent des signaux logiques apparaissant sur les noeuds du circuit logique de la figure 4, pour deux valeurs du signal de sélection de fonction,
- la figure 7 représente sous forme de blocs un exemple de réalisation d'un circuit de cryptographie à polarité variable, et
- la figure 8 représente sous forme de blocs un exemple d'architecture de circuit intégré sécurisé comprenant des circuits logiques à polarité variable selon l'invention.

La présente invention se fonde sur le fait, en soi connu de l'homme de l'art, que toute fonction logique peut être exécutée à partir de portes logiques élémentaires de type NON ET ("NAND") ou de type NON OU ("NOR"). Un autre fait sur lequel se fonde l'invention est qu'une architecture de circuit logique réalisée au moyen de porte NON ET et une architecture identique de circuit logique dans laquelle les portes NON ET sont remplacées par des portes NON OU, exécutent respectivement deux fonctions logiques F1 et F2 qui présentent certaines similitudes. Plus particulièrement, le résultat de la transformation par la fonction F1 de données A, B, C... est l'inverse du résultat de la transformation par la fonction F2 des données inversées /A, /B, /C..., ce qui peut s'écrire :

$$(1) \qquad F1(A, B, C...) = /[F2(/A, /B, /C..)]$$

Sur le fondement de cette relation, la présente invention propose de réaliser des circuits logiques capables d'exécuter une fonction logique de deux façons différentes, d'une part au moyen de portes NON ET et d'autre part au moyen de portes NON OU.

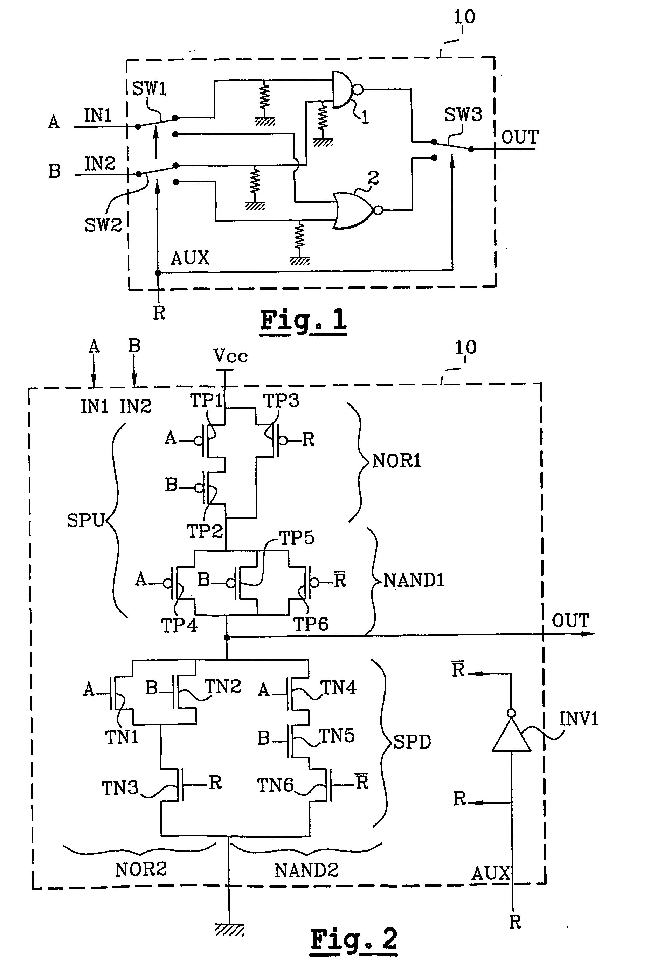

Avant de décrire des exemples de réalisation de tels circuits logiques, on décrira en relation avec les figures 1 et 2 une porte logique à deux modes de fonctionnement pouvant être utilisée pour réaliser de tels circuits logiques. Une telle porte logique peut notamment constituer la cellule élémentaire d'un système de conception de circuits logiques assisté par ordinateur.

La porte 10 représentée en figure 1 présente deux entrées de données IN1, IN2, une entrée auxiliaire AUX et une sortie de données OUT, et comprend une porte NON ET 1 et une porte NON OU 2 à deux entrées chacune. Les entrées IN1, IN2 sont reliées aux entrées correspondantes des portes 1 et 2 par l'intermédiaire de deux interrupteurs SW1, SW2 pilotés par un signal de sélection de fonction R, appliqué sur l'entrée AUX. Les sorties des portes 1 et 2 sont reliées à la sortie OUT par l'intermédiaire d'un troisième interrupteur SW3, également piloté par le signal R. Lorsque le signal R est à 0, les entrées IN1, IN2 sont connectées aux entrées de la porte 1 et la sortie de la porte 1 est connectée à la sortie OUT. Lorsque le signal R est à 1, les entrées IN1, IN2 sont connectées aux entrées de la porte 2 et la sortie de la porte 2 est connectée à la sortie OUT. Ainsi, en supposant que la porte 10 reçoive en entrée des bits A et B, la porte 10 exécute la fonction NON ET quand R est égal à 0 et la fonction NON OU quand R est égal à 1. En d'autres termes :

$$(2) \qquad OUT_{(R=0)} = / (A*B) = NON\ ET\ (A,B)$$

$$(3) \qquad OUT_{(R=1)} = / (A+B) = NON\ OU(A,B)$$

Subsidiairement, on peut ici noter que :

$$(4) \qquad /[NON\ OU(/A,/B)] = /[/(/A+/B)] = /[A*B] = NON\ ET(A,B)$$

Ainsi, l'inverse de la transformée par la fonction NON OU des données inversées /A et /B est égal à la transformée par la fonction NON ET des données non inversées A et B, ce qui constitue un cas particulier de la relation générale (1) mentionnée plus haut.

La figure 2 représente un exemple de réalisation de la porte logique 10 au moyen de transistors NMOS et PMOS. La porte 10 comprend un étage de maintien à l'état haut SPU (étage "pull-up") polarisé par une tension d'alimentation Vcc et un étage de maintien à l'état bas SPD (étage "pull-down) connecté à la masse (GND), le point de connexion des deux étages formant le noeud de sortie OUT de la porte 10. L'étage SPU est réalisé au moyen de transistors PMOS et comprend un étage NOR1 en série avec un étage NAND1. L'étage SPD est réalisé au moyen de transistors NMOS et comprend un étage NOR2 en parallèle avec un étage NAND2. L'étage NOR1 comprend deux transistors en série TP1, TP2 et un transistor TP3 en parallèle avec ces deux transistors TP1, TP2, les sources des transistors TP1 et TP3 recevant la tension Vcc. L'étage NAND1, agencé entre l'étage NOR1 et le noeud de sortie OUT, comprend trois transistors TP4, TP5, TP6 en parallèle. L'étage NOR2 comprend deux transistors TN1, TN2 en parallèle, agencés en série avec un transistor TN3 dont la source est connectée à la masse. L'étage NAND2 comprend trois transistors TN4, TN5, TN6 en série, la source du transistor TN6 étant connectée à la masse. La porte 10 comprend également une porte inverseuse INV1 (réalisée classiquement au moyen d'un transistor PMOS et d'un transistor NMOS, non représentés) dont l'entrée est connectée à l'entrée AUX et dont la sortie délivre un signal /R. L'entrée IN1 de la porte 10, recevant le bit A, est connectée aux grilles des transistors TP1, TP4, TN1, TN4. L'entrée IN2, recevant le bit B, est connecté aux grilles des transistors TP2, TP5, TN2, TN5. L'entrée AUX recevant le signal R est connectée aux grilles des transistors TP3 et TN3. La sortie de la porte INV1 délivrant le signal inversé /R est connectée aux grilles des transistors TP6, TN6.

Lorsque le signal R est à 1 et que /R est à 0, les transistors TP3 et TN6 sont bloqués et les transistors TP6 et TN3 sont passants. L'étage NAND1 est court-circuité par le transistor TP6 et l'étage NAND2 est inhibé, le transistor TN6 reliant l'étage NAND2 à la masse étant bloqué. Les étages NOR1 et NOR2 sont actifs et la porte 10 fonctionne comme une porte NON OU. Inversement, lorsque R est égal à 0 et /R égal à 1, l'étage NOR1 est court-circuité (TP3 passant) et l'étage NOR2 est inhibé (TN3 bloqué). Les étages NAND1 et NAND2 sont actifs et la porte 10 fonctionne comme une porte NON ET.

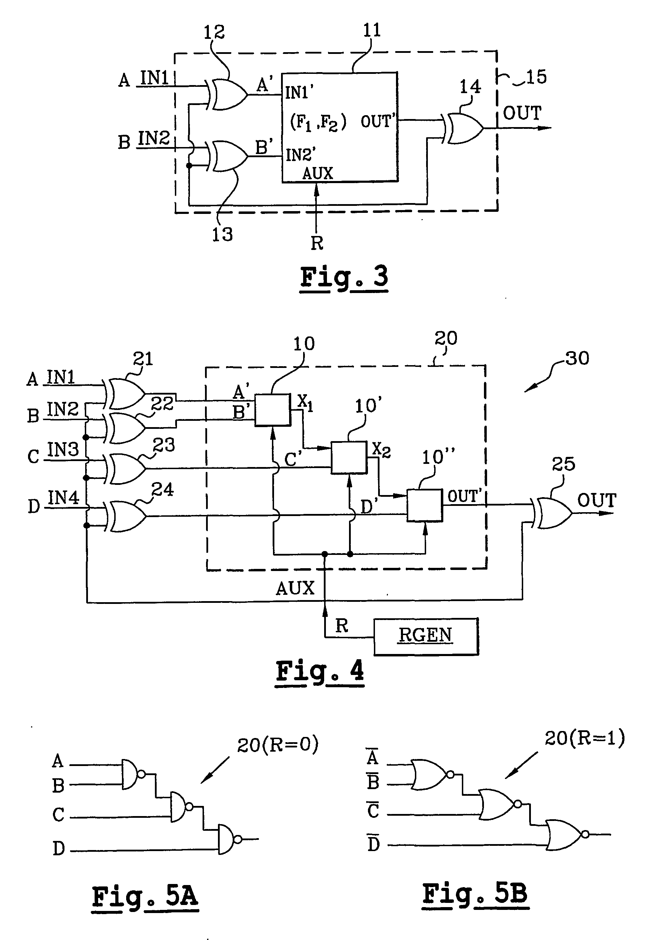

On supposera maintenant en référence à la figure 3 que l'on souhaite réaliser un circuit logique 15 à deux entrées IN1, IN2 et une sortie OUT, exécutant une fonction logique F1 déterminée. On supposera également que l'on sait réaliser la fonction F1 par un agencement particulier de portes logiques NON ET, ce qui est toujours le cas en pratique.

Selon un premier aspect du procédé de l'invention, l'agencement des portes NON ET est conservé mais les portes NON ET sont remplacées par des portes 10 selon l'invention, pour former un bloc logique 11 présentant deux entrées de données IN1', IN2', une sortie de données OUT' et une entrée AUX. Le bloc logique 11 reçoit sur l'entrée AUX le signal de sélection de fonction R appliqué aux portes logiques 10 qui le constituent (non représentées). Un tel bloc logique 11 exécute ainsi la fonction F1 quand R est égal à 0 et exécute une fonction F2 quand R est égal à 1, les portes 10 fonctionnant alors comme des portes NON OU. La fonction F2 est liée à la fonction F1 par la relation (1) mentionnée plus haut.

Selon un second aspect du procédé de l'invention, trois portes 12, 13, 14 de type OU EXCLUSIF sont ensuite associées au bloc logique 11 pour former le circuit logique complet 15. Chaque porte 12, 13, 14 reçoit sur une première entrée le signal de sélection de fonction R. La deuxième entrée de la porte 12 est connectée à l'entrée IN1 du circuit logique 15, la deuxième entrée de la porte 13 est connectée à l'entrée IN2 du circuit logique 15 et la deuxième entrée de la porte 14 est connectée à la sortie OUT' du bloc logique 11. La sortie de la porte 12 est connectée à l'entrée IN1' du bloc logique 11, la sortie de la porte 13 est connectée à l'entrée IN2' du bloc logique 11, et la sortie de la porte 14 forme la sortie OUT du circuit logique 15.

En désignant par A et B les données appliquées sur les entrées IN1 et IN2 du circuit 15, et par A' et B' les données appliquées sur les entrées IN1', IN2' du bloc 11, le fonctionnement du circuit logique 15 est défini par les relations suivantes :

quand R=0 :

A'= A, B'=B, OUT = OUT'

$$(5) \qquad OUT_{(R=0)} = F1(A,B)$$

quand R=1 :

A'= /A, B'=/B, OUT = /OUT'

$$(6) \qquad OUT_{(R=1)} = /F2\,(A',\,B') = /F2(/A,/B)$$

car les portes OU EXCLUSIF se comportent, vis-à-vis des données A, B et de la sortie OUT', comme des portes inverseuses quand R est égal à 1 et comme des portes non-inverseuses lorsque R est égal à 0.

En combinant la relation (6) et la relation générale (1), il vient que :

$$(7) \qquad OUT_{(R=1)} = /F2(/A,/B) = F1(A,B) = OUT_{(R=0)}$$

Ainsi, vu .depuis ses entrées et sa sortie, le circuit logique 15 exécute toujours la même fonction F1, mais de manière différente lorsque R=0 et lorsque R=1. Il en découle que les polarités que présentent les noeuds internes du circuit logique 15 ne sont pas les mêmes selon la valeur de R, pour des données A, B identiques appliquées en entrée. Ainsi, comme cela apparaîtra clairement par la suite, l'attribution d'une valeur aléatoire au signal de sélection de mode R permet de modifier les polarités des signaux internes du circuit logique 15 de façon aléatoire sans modifier le résultat qu'il délivre, et permet par conséquent de brouiller son fonctionnement et sa consommation électrique.

La figure 4 représente un exemple de réalisation d'un circuit logique 30 selon l'invention, dans le cas simple choisi à titre d'exemple où la fonction F1 est la fonction "NON ET" à quatre entrées. Le circuit 30 comprend ainsi quatre entrées IN1 à IN4 recevant des bits A, B, C, D et une sortie OUT délivrant le résultat. Conformément à l'architecture proposée plus haut, le circuit 30 comprend un bloc logique 20 présentant quatre entrées IN1' à IN4' et une sortie OUT', ainsi que des portes OU EXCLUSIF 21 à 24 agencées entre les entrées IN1 à IN4 et les entrées IN1' à IN4', et une porte OU EXCLUSIF 25 agencée entre la sortie OUT' et la sortie OUT.

Chaque porte 21 à 25 reçoit sur une entrée le signal de sélection de mode R, délivré ici par un générateur de signal aléatoire RGEN. Les portes 21 à 24 reçoivent sur leur deuxième entrée l'un des bit A, B, C, D et délivrent aux entrées IN1' à IN4' un bit A', B', C', D', respectivement. La porte 25 reçoit sur sa deuxième entrée la sortie OUT' du bloc 20 et sa sortie forme la sortie OUT du circuit logique 30. Le bloc logique 20 comprend trois portes 10, 10', 10'' selon l'invention agencées en cascade, remplaçant des portes NON ET conventionnelles, chaque porte étant contrôlée par le signal de sélection R. La porte 10 reçoit ainsi en entrée les bits A et B, la porte 10' reçoit en entrée le bit C' et un signal X1 délivré par la porte 10, et la porte 10'' reçoit en entrée le bit D' et un signal X2 délivré par la porte 10'.

Sur la figure 5A, il apparaît que le bloc 20 est équivalent à trois portes NON ET en cascade quand R est égal à 0. Sur la figure 5B, il apparaît que le bloc 20 est équivalent à trois portes NON OU en cascade quand R est égal à 1. Conformément à la relation (7), la fonction exécutée par le circuit logique 30 vu depuis ses entrées et sa sortie est la fonction NON ET, quelle que soit la valeur du signal R, grâce aux portes OU EXCLUSIF qui inversent les entrées et la sortie du circuit 30 lorsque R est égal à 1.

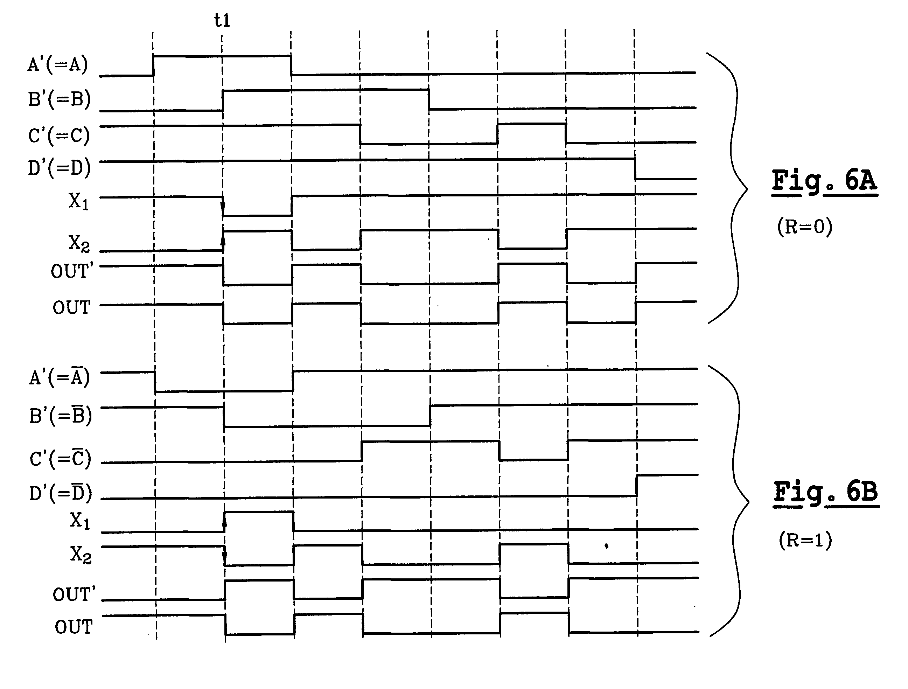

La figure 6A illustre le fonctionnement du circuit 30 lorsque les bits A à D appliqués sur les entrées IN1 à IN4 présentent une séquence de valeurs déterminées et lorsque R est égal à 0. La figure 6B illustre le fonctionnement du circuit 30 lorsque la même séquence de bits est appliquée au circuit 30 et lorsque R est égal à 1. On distingue sur chacune de ces figures les chronogrammes des signaux A', B', C', D', X1, X2, OUT' et OUT. Ces figures montrent clairement que les polarités de ces divers signaux sont inversées quand R est égal à 1, bien que la séquence délivrée par la sortie OUT ne change pas. Ainsi, par exemple, le signal X1 passe à 0 à un instant t1 quand R est égal à 0 et passe à 1 au même instant t1 quand R est égal à 1.

La valeur du signal de sélection de mode R étant de préférence aléatoire, les valeurs logiques apparaissant sur les noeuds d'un tel circuit logique présentent un caractère non prédictif et non-répétitif. Cette propriété d'un circuit logique selon l'invention permet de lutter contre les techniques de piratage mentionnées au préambule, notamment le piratage par observation des signaux logiques ("probing") ou par observation de la consommation électrique du circuit logique (attaque du type DPA). En effet, la consommation instantanée du circuit logique étant fonction du nombre de commutations à 1 des noeuds internes du circuit (tension Vcc), il va de soi que cette consommation n'est pas la même lorsque R est égal à 1 et lorsque R égal à 0, y compris quand les données appliquées en entrée sont identiques.

En pratique, le signal de sélection de mode R est rafraîchi (renouvelé de façon aléatoire) à des instants précis à déterminer lors de la conception du circuit logique. Si la séquence représentée en figures 6A, 6B est synchronisée à un signal d'horloge, le signal R peut être rafraîchi à chaque cycle d'horloge ou tous les K cycles d'horloge, ou encore être rafraîchi avant chaque nouvelle utilisation du circuit logique 30 (soit avant chaque application d'une nouvelle séquence de bits). Quand le signal R est rafraîchi de façon aléatoire à chaque cycle d'horloge ou tous les K cycles d'horloge, les chronogrammes illustrant le fonctionnement du circuit 30 comprennent une combinaison des chronogrammes de la figure 6A et des chronogrammes de la figure 6B, selon la valeur (aléatoire) que présente le signal R à chaque cycle d'horloge.

La présente invention est bien entendu susceptible d'être appliquée à la réalisation de tout type de circuit logique. A cet effet, il suffit de déterminer de façon classique la topographie du circuit logique réalisé au moyen de portes NON ET (ou de portes NON OU), puis d'utiliser des portes logiques à deux modes de fonctionnement selon l'invention à la place des portes NON ET classiques. Des moyens inverseurs on non-inverseurs selon la valeur du signal R, telles les portes OU EXCLUSIF décrites plus haut, sont ensuite agencés sur les entrées et les sorties du bloc logique ainsi réalisé.

Il apparaîtra clairement à l'homme de l'art que le procédé de brouillage selon l'invention est susceptible de divers autres modes de réalisation. Bien que l'on ait proposé dans ce qui précède de concevoir d'un circuit logique à deux modes de fonctionnent à partir de portes logiques élémentaires 10 à deux entrées, des portes logiques selon l'invention à trois entrées voire plus peuvent être prévues. Egalement, la conception d'un circuit logique à deux modes de fonctionnement peut être faite au niveau "transistor" ("transistor level") au lieu d'être faite au niveau "porte" ("gate level") comme cela a été décrit plus haut. Cela signifie que l'on peut réaliser, par un agencement déterminé de transistors, un circuit logique à deux modes de fonctionnement exécutant la même fonction quel que soit le mode de fonctionnement sélectionné, tout en présentant des polarités différentes sur ses noeuds internes selon le mode de fonctionnement sélectionné. Egalement, un circuit logique selon l'invention peut comprendre des modes de fonctionnement différents obtenus par combinaison de portes logiques autres que des portes NON ET ou NON OU, par exemple des combinaisons de portes ET, de portes OU, de portes inverseuses, de portes OU EXCLUSIF...

D'autre part, bien que l'on ait décrit dans ce qui précède un circuit logique réalisant la même fonction de deux façons différentes, il entre dans le cadre de la présente invention de prévoir un circuit logique réalisant la même fonction de trois manières différentes, de quatre manières différentes, etc.. A cet effet, la méthode suivante peut par exemple être retenue : la fonction logique à exécuter est synthétisée au moyen d'un premier type de portes logiques pour former un premier bloc logique L1, puis est synthétisée au moyen d'un second type de portes logiques pour former un second bloc logique L2, puis au moyen d'un troisième type de portes logiques pour former un troisième bloc logique F3, etc.. Les blocs logiques L1, L2, L3... sont ensuite agencés en parallèle, leurs entrées sont connectées à un multiplexeur et leurs sorties sont connectées à un démultiplexeur, le multiplexeur et le démultiplexeur étant pilotés par le signal de sélection R (qui comprend dans ce cas plusieurs bits). Selon la valeur du signal R, la fonction logique est exécutée par l'un ou l'autre des blocs L1, L2, L3... Un tel mode de réalisation permet de contrer une attaque en monitoring de courant de type DPA, car chaque bloc logique possède sa propre "signature" en termes de consommation électrique. Outre cette méthode consistant à agencer en parallèle des blocs logiques réalisés au moyen de portes logiques conventionnelles, un circuit logique multifonction piloté par le signal de sélection R peut aussi être synthétisé à partir de portes logiques multifonction selon l'invention, de manière à obtenir des fonctions logiques entrelacées présentant des noeuds internes communs, afin de contrer des attaques par observation de signaux logiques ("probing"). Une intégration encore plus poussée peut également être obtenue par une conception au niveau "transistor" ("transistor level") du circuit logique multifonction.

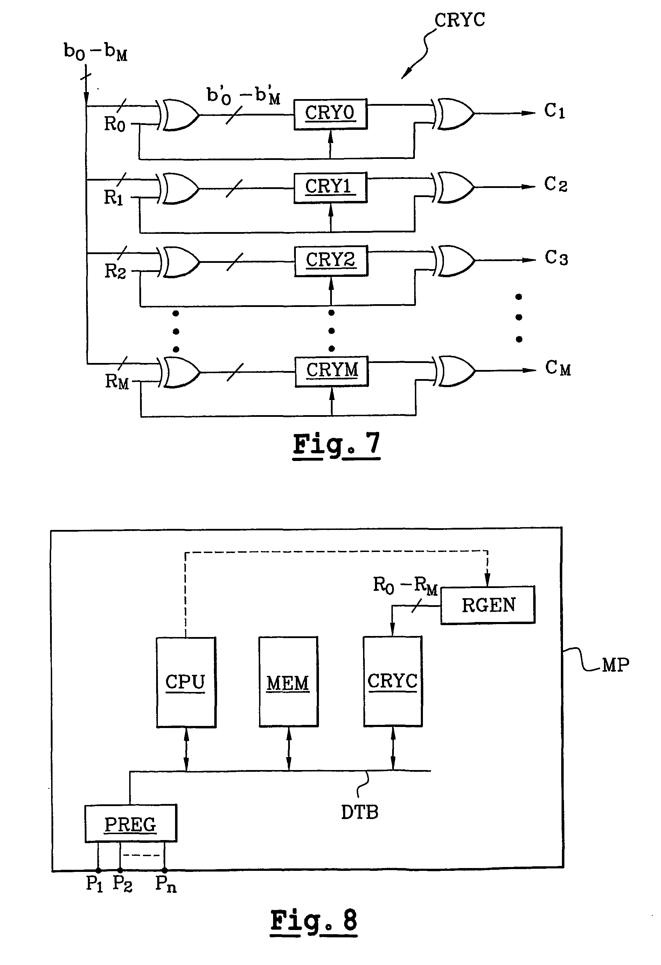

La figure 7 illustre une application du procédé de l'invention à la réalisation d'un circuit de cryptographie CRYC présentant une pluralité de blocs de codage $CRY_0$ à $CRY_M$, chaque bloc étant prévu pour recevoir en entrée des bits de données $b_0$ à $b_N$ et délivrer un bit de code, respectivement $C_0$ à $C_M$. Cette architecture de circuit de cryptographie est bien connue de l'homme de l'art et correspond par exemple à un circuit de cryptographie de type "3DES". Conformément au procédé de l'invention, chaque bloc $CRY_0$-$CRY_M$ est réalisé au moyen de portes à deux modes de fonctionnement selon l'invention (non représentées). Les bits de données $b_0$-$b_N$ sont appliqués à chaque bloc $CRY_0$-$CRY_M$ par l'intermédiaire de portes OU EXCLUSIF individuelles pilotées par le signal R, représentées schématiquement par des portes OU EXCLUSIF à N entrées recevant les bits $b_0$-$b_N$ et le signal de sélection R. De même, chaque bit de code $C_0$ à $C_M$ est prélevé à la sortie de chaque bloc $CRY_0$-$CRY_M$ par l'intermédiaire de portes OU EXCLUSIF recevant le signal R sur leur autre entrée.

De préférence, le signal R appliqué à chaque bloc $CRY_0$-$CRY_M$ est statistiquement différent du signal R appliqué aux autres blocs. Ainsi le bloc $CRY_0$ et les portes OU EXCLUSIF associées au bloc $CRY_0$ reçoivent un bit aléatoire $R_0$, le bloc $CRY_1$ et les portes OU EXCLUSIF associées au bloc $CRY_1$ reçoivent un bit aléatoire $R_1$..., le bloc $CRY_M$ et les portes OU EXCLUSIF associées au bloc $CRY_M$ reçoivent un bit aléatoire $R_M$.

La figure 8 illustre un exemple d'intégration du circuit de cryptographie CRYC dans une puce de silicium formant un microprocesseur sécurisé MP. Une telle puce de silicium est destinée à être montée sur un support portable, par exemple une carte plastique, pour former une carte à puce ou tout autre objet portable électronique équivalent. Le microprocesseur MP comprend une unité centrale de traitement CPU, une mémoire MEM, le circuit de cryptographie CRYC décrit plus haut ainsi que des registres PREG reliés à des ports d'entrée/sortie P1, P2,... Pn. Ces divers éléments sont connectés à un bus de données DTB. Un générateur de signal aléatoire RGEN est prévu pour délivrer des signaux de sélection de mode $R_0$ à $R_M$ à chacun des blocs de codage du circuit CRYC (fig. 7). Le générateur RGEN est activé ici par l'unité CPU à chaque nouvelle session, c'est-à-dire après chaque remise à zéro du microprocesseur. Ainsi, lorsqu'une chaîne de bits est appliquée au circuit CRYC en début de session pour le calcul d'un code d'authentification, les noeuds internes des blocs de codage présents dans le circuit CRYC présentent des polarités et une consommation de courant non constants au regard de la session précédente, y compris quand la chaîne de bits appliquée au circuit CRYC est identique. Les polarités des noeuds internes des blocs de codage varient d'une session à l'autre selon une loi aléatoire propre à chaque bloc et indépendante de celle des autres blocs de codage.

En pratique, le procédé de brouillage selon l'invention est susceptible d'être combiné avec d'autres procédés de brouillage connus, tels les procédés consistant à injecter du bruit dans le circuit d'alimentation, à utiliser un signal d'horloge interne aléatoire,...

**Revendications**

1. Circuit logique (15, 20, $CRY_0$-$CRY_M$) prévu pour exécuter une fonction logique (F1) à N entrées de données et M sorties de données, N étant au moins égal à 2 et M au moins égal à 1, **caractérisé en ce qu'**il comprend des portes logiques (10) et/ou des transistors (TP, TN) agencés pour exécuter la fonction logique au moins de deux manières différentes (F1, F2), la manière selon laquelle la fonction logique est exécutée étant déterminée par la valeur d'un signal de sélection de fonction (R) appliqué au circuit logique, de telle sorte que, pour des données identiques (A, B, C, D, $b_0$-$b_N$) appliquées à l'entrée du circuit logique et des valeurs différentes du signal de sélection de fonction (R), les polarités de certains noeuds internes du circuit logique et/ou la consommation électrique du circuit logique ne sont pas identiques.

2. Circuit logique selon la revendication 1, comprenant :

   - un bloc logique (15, 20) comprenant N entrées (IN1', IN2') reliées aux entrées de données (IN1, IN2) du circuit logique et M sorties (OUT') reliées aux sorties de données (OUT) du circuit logique, le bloc logique étant agencé pour exécuter une première fonction logique(F1) ou une seconde fonction logique (F2) selon la valeur du signal de sélection de fonction, et
   - des moyens (12-14, 21-25) pour inverser les données appliquées au bloc logique et pour inverser les données délivrées par le bloc logique, lorsque le signal de sélection présente une valeur déterminée (R=1).

3. Circuit logique selon l'une des revendications 1 et 2, dans lequel les moyens pour inverser les données appliquées comprennent des portes OU EXCLUSIF recevant sur une entrée le signal de sélection de fonction (R).

4. Circuit logique selon l'une des revendications 1 à 3, comprenant des portes logiques (10) exécutant la fonction NON ET lorsque le signal de sélection de fonction présente une première valeur logique (R=0) et la fonction NON OU lorsque le signal de sélection de fonction présente une deuxième valeur logique (R=1).

5. Circuit logique selon l'une des revendications 1 à 4, **caractérisé en ce qu'**il est relié à un générateur de signal aléatoire (RGEN) agencé pour délivrer un signal de sélection de fonction (R) aléatoire.

6. Circuit logique selon l'une des revendications 1 à 5, comprenant des portes logiques (10) comprenant chacune :

   - un premier groupe de transistors (1, TP4, TP5, TN4, TN5) agencés pour exécuter une première fonction de porte logique,
   - un deuxième groupe de transistors (2, TP1, TP2, TN1, TN2) agencés pour exécuter une seconde fonction de porte logique, et
   - des moyens de sélection de fonction (SW1, SW2, SW3, TP3, TP6, TN3, TN6, INV1) agencés pour recevoir le signal (R) de sélection de fonction et valider à la sortie de la porte logique l'une ou l'autre des deux fonctions de porte logique selon la valeur du signal de sélection de fonction.

7. Circuit logique selon la revendication 6, dans lequel les moyens de sélection de fonction des portes logiques comprennent des transistors (TP3, TP6) agencés pour court-circuiter des transistors (TP1, TP2, TP4, TP5) affectés à l'exécution de l'une ou l'autre des deux fonctions de porte logique, selon la valeur du signal de sélection de fonction (R).

8. Circuit logique selon la revendication 7, dans lequel les moyens de sélection de fonction des portes logiques comprennent des transistors (TN3, TN6) agencés pour couper des chemins de conduction passant par des transistors (TN1, TN2, TN4, TN5) affectés à l'exécution de l'une ou l'autre des deux fonctions de porte logique, selon la valeur du signal de sélection (R).

9. Circuit logique selon l'une des revendications 6 à 8 dans lequel la première fonction de porte logique est la fonction NON ET et la deuxième fonction de porte logique est la fonction NON OU.

10. Circuit logique ($CRY_0$-$CRY_M$) selon l'une des revendications 1 à 9, dans lequel la fonction logique exécutée par le circuit logique est une fonction de cryptographie.

11. Circuit de cryptographie (CRYC), **caractérisé en ce qu'**il comprend une pluralité de blocs de cryptographie ($CRY_0$-$CRY_M$) comprenant chacun un circuit logique selon la revendication 10.

**12.** Circuit de cryptographie selon la revendication 11, relié à un générateur de signal aléatoire agencé pour appliquer à chaque bloc de cryptographie un signal de sélection de fonction aléatoire dont la valeur est indépendante du signal de sélection de fonction appliqué aux autres blocs de cryptographie.

**13.** Circuit intégré sécurisé, **caractérisé en ce qu'**il comprend une pluralité de circuits logiques selon l'une des revendications 1 à 10, et des moyens pour appliquer aux circuits logiques un signal de sélection de fonction de type aléatoire dont la valeur est modifiée de façon aléatoire au moins après chaque remise à zéro du circuit intégré.

**14.** Circuit intégré (MP) selon la revendication 13, **caractérisé en ce qu'**il comprend une unité centrale de microprocesseur (CPU).

**15.** Circuit intégré selon l'une des revendications 13 et 14, agencé sur un support portable pour former une carte à puce ou tout autre objet électronique portable équivalent.

**16.** Procédé de brouillage du fonctionnement d'un circuit logique (15, 20, $CRY_0$-$CRY_M$) prévu pour exécuter une fonction logique (F1) à N entrées de données et M sorties de données, N étant au moins égal à 2 et M au moins égal à 1, **caractérisé en ce qu'**il comprend les étapes consistant à :

- prévoir dans le circuit logique des portes logiques (10) et/ou des transistors (TP, TN) agencés pour exécuter la fonction logique au moins de deux manières différentes, la manière selon laquelle la fonction logique est exécutée étant déterminée par la valeur d'un signal de sélection de fonction (R) appliqué au circuit logique,
- appliquer au circuit logique un signal de sélection de fonction (R) aléatoire, et
- rafraîchir le signal de sélection de fonction à des instants déterminés, de manière à brouiller le fonctionnement du circuit logique.

**17.** Procédé selon la revendication 16, comprenant les étapes consistant à prévoir, dans le circuit logique :

- un bloc logique (15, 20) comprenant N entrées (IN1', IN2') reliées aux entrées de données (IN1, IN2) du circuit logique et M sorties (OUT') reliées aux sorties de données (OUT) du circuit logique, le bloc logique étant agencé pour exécuter une première fonction logique(F1) ou une seconde fonction logique (F2) selon la valeur du signal de sélection de fonction, et
- des portés logiques (12-14, 21-25) agencées pour inverser les données appliquées au bloc logique et pour inverser les données délivrées par le bloc logique lorsque le signal de sélection présente une valeur déterminée (R=1).

**18.** Procédé selon la revendication 17, dans lequel le bloc logique est réalisé au moyen de portes logiques (10) exécutant la fonction NON ET lorsque le signal de sélection de fonction présente une première valeur logique (R=0) et la fonction NON OU lorsque le signal de sélection de fonction présente une deuxième valeur logique (R=1).

**Patentansprüche**

**1.** Logischer Schaltkreis (15, 20, $CRY_0$-$CRY_M$), der dazu vorgesehen ist, eine logische Funktion (F1) mit N Dateneingängen und M Datenausgängen auszuführen, wobei N mindestens gleich 2 und M mindestens gleich 1 ist, **dadurch gekennzeichnet, dass** er logische Gatter (10) und/oder Transistoren (TP, TN) umfasst, die derart angeordnet sind, dass sie die logische Funktion zumindest auf zwei unterschiedliche Arten (F1, F2) ausführen, wobei die Art, nach der die logische Funktion ausgeführt wird, durch den Wert eines Funktionsauswahlsignals (R) bestimmt wird, der an den logischen Schaltkreis angelegt wird, so dass für identische Daten (A, B, C, D, $b_0$-$b_N$), die an den Eingang der logischen Schaltung angelegt werden, und unterschiedliche Werte des Funktionsauswahlsignals (R) die Polaritäten gewisser interner Knoten des logischen Schaltkreises und/oder der Stromverbrauch des logischen Schaltkreises nicht identisch sind.

**2.** Logischer Schaltkreis nach Anspruch 1, umfassend:

- einen logischen Block (15, 20), umfassend N Eingänge (IN1', IN2'), die mit den Dateneingängen (IN1, IN2) des logischen Schaltkreises verbunden sind, und M Ausgänge (OUT'), die mit den Datenausgängen (OUT) des logischen Schaltkreises verbunden sind, wobei der logische Block derart angeordnet ist, dass er eine erste logische Funktion (F1) oder eine zweite logische Funktion (F2) je nach dem Wert des Funktionsauswahlsignals erfüllt, und

- Mittel (12-14, 21-25), um die an den logischen Block angelegten Daten umzukehren und um die von dem logischen Block gelieferten Daten umzukehren, wenn das Auswahlsignal einen bestimmten Wert (R=1) aufweist.

3. Logischer Schaltkreis nach einem der Ansprüche 1 und 2, bei dem die Mittel zur Umkehr der angelegten Daten Gatter EXKLUSIVES ODER umfassen, die an einem Eingang das Funktionsauswahlsignal (R) empfangen.

4. Logischer Schaltkreis nach einem der Ansprüche 1 bis 3, umfassend logische Gatter (10), die die Funktion NICHT UND ausführen, wenn das Funktionsauswahlsignal einen ersten logischen Wert (R=0) aufweist, und die Funktion NICHT ODER ausführen, wenn das Funktionsauswahlsignal einen zweiten logischen Wert (R=1) aufweist.

5. Logischer Schaltkreis nach einem der Ansprüche 1 bis 4, **dadurch gekennzeichnet, dass** er mit einem Generator eines Zufallssignals (RGEN) verbunden ist, der derart angeordnet ist, dass er ein zufälliges Funktionsauswahlsignal (R) liefert.

6. Logischer Schaltkreis nach einem der Ansprüche 1 bis 5, umfassend logische Gatter (10), jeweils umfassend:

- eine erste Gruppe von Transistoren (1, TP4, TP5, TN4, TN5), die derart angeordnet sind, dass sie eine erste Funktion eines logischen Gatters erfüllen,

- eine zweite Gruppe von Transistoren (2, TP1, TP2, TN1, TN2), die derart angeordnet sind, dass sie eine zweite Funktion eines logischen Gatters ausführen, und

- Funktionsauswahlmittel (SW1, SW2, SW3, TP3, TP6, TN3, TN6, INV1), die derart angeordnet sind, dass sie das Funktionsauswahlsignal (R) empfangen und am Ausgang des logischen Gatters die eine oder die andere der beiden Funktionen eines logischen Gatters je nach dem Wert des Funktionsauswahlsignals validieren.

7. Logischer Schaltkreis nach Anspruch 6, bei dem die Funktionsauswahlmittel der logischen Gatter Transistoren (TP3, TP6) umfassen, die derart angeordnet sind, dass sie Transistoren (TP1, TP2, TP4, TP5), die bei der Ausführung von der einen oder der anderen der beiden Funktionen eines logischen Gatters betroffen sind, je nach dem Wert des Funktionsauswahlsignals (R) kurzschließen.

8. Logischer Schaltkreis nach Anspruch 7, bei dem die Funktionsauswahlmittel der logischen Gatter Transistoren (TN3, TN6) umfassen, die derart angeordnet sind, dass sie je nach dem Wert des Auswahlsignals (R) Leitungswege abschneiden, die durch Transistoren (TN1, TN2, TN4, TN5) verlaufen, die von der Ausführung der einen oder der anderen der beiden Funktionen eines logischen Gatters betroffen sind.

9. Logischer Schaltkreis nach einem der Ansprüche 6 bis 8, bei dem die erste Funktion eines logischen Gatters die Funktion NICHT UND und die zweite Funktion eines logischen Gatters die Funktion NICHT ODER ist.

10. Logischer Schaltkreis ($CRY_0$-$CRY_M$) nach einem der Ansprüche 1 bis 9, bei dem die logische Funktion, die von dem logischen Schaltkreis ausgeführt wird, eine kryptografische Funktion ist.

11. Kryptografischer Schaltkreis (CRYC), **dadurch gekennzeichnet, dass** er eine Vielzahl von kryptografischen Blöcken ($CRY_0$-$CRY_M$) aufweist, jeweils umfassend einen logischen Schaltkreis nach Anspruch 10.

12. Kryptografischer Schaltkreis nach Anspruch 11, der mit einem Generator eines Zufallssignals verbunden ist, der derart angeordnet ist, dass er an jeden kryptografischen Block ein zufälliges Funktionsauswahlsignal anlegt, dessen Wert von dem an die anderen kryptografischen Blöcke angelegten Funktionsauswahlsignal unabhängig ist.

13. Gesicherter integrierter Schaltkreis, **dadurch gekennzeichnet, dass** er eine Vielzahl von logischen Schaltkreisen nach einem der Ansprüche 1 bis 10 und Mittel umfasst, um an die logischen Schaltkreise ein Funktionsauswahlsignal zufälligen Typs anzulegen, dessen Wert zufällig zumindest nach jeder Rückstellung des integrierten Schaltkreises verändert wird.

14. Integrierter Schaltkreis (MP) nach Anspruch 13, **dadurch gekennzeichnet, dass** er eine Mikroprozessor-Zentraleinheit (CPU) umfasst.

**15.** Integrierter Schaltkreis nach einem der Ansprüche 13 und 14, der auf einem tragbaren Träger angeordnet ist, um eine Chipkarte oder jeden anderen gleichwertigen tragbaren Gegenstand zu bilden.

**16.** Verfahren zur Störung der Funktion eines logischen Schaltkreises (15, 20, $CRY_0$-$CRY_M$), das dazu vorgesehen ist, eine logische Funktion (F1) mit N Dateneingängen und M Datenausgängen auszuführen, wobei N mindestens gleich 2 und M mindestens gleich 1 ist, **dadurch gekennzeichnet, dass** es die folgenden Schritte umfasst, darin bestehend:

- in dem logischen Schaltkreis logische Gatter (10) und/oder Transistoren (TP, TN) vorzusehen, die derart angeordnet sind, dass sie die logische Funktion auf mindestens zwei unterschiedliche Arten ausführen, wobei die Art, nach der die logische Funktion ausgeführt wird, durch den Wert eines Funktionsauswahlsignals (R), das an den logischen Schaltkreis angelegt wird, bestimmt wird,

- an den logischen Schaltkreis ein zufälliges Funktionsauswahlsignal (R) anzulegen, und

- das Funktionsauswahlsignal zu bestimmten Zeitpunkten aufzufrischen, um die Funktion des logischen Schaltkreises zu stören.

**17.** Verfahren nach Anspruch 16, umfassend die folgenden Schritte, die darin bestehen, im logischen Schaltkreis vorzusehen:

- einen logischen Block (15, 20), umfassend N Eingänge (IN1', IN2'), die mit den Dateneingängen (IN1, IN2) des logischen Schaltkreises verbunden sind, und M Ausgänge (OUT'), die mit den Datenausgängen (OUT) des logischen Schaltkreises verbunden sind, wobei der logische Block derart angeordnet ist, dass er eine erste logische Funktion (F1) oder eine zweite logische Funktion (F2) je nach dem Wert des Funktionsauswahlsignals ausführt, und

- logische Gatter (12-14, 21-25), die derart angeordnet sind, dass die an den logischen Block angelegten Daten umgekehrt werden und die von dem logischen Block gelieferten Daten umgekehrt werden, wenn das Auswahlsignal einen bestimmten Wert (R=1) aufweist.

**18.** Verfahren nach Anspruch 17, bei dem der logische Block mit Hilfe von logischen Gattern (10) hergestellt ist, die die Funktion NICHT UND ausführen, wenn das Funktionsauswahlsignal einen ersten logischen Wert (R=0) aufweist, und die Funktion NICHT ODER ausführen, wenn das Funktionsauswahlsignal einen zweiten logischen Wert (R=1) aufweist.

**Claims**

**1.** Logic circuit (15, 20, $CRY_0$-$CRY_M$) provided to perform a logic function (F1) with N data inputs and M data outputs, N being at least equal to 2 and M at least equal to 1, **characterised in that** it comprises logic gates (10) and/or transistors (TP, TN) arranged to perform the logic function in at least two different ways (F1, F2), the way in which the logic function is performed being determined by the value of a function selection signal (R) applied to the logic circuit, such that, for identical data (A, B, C, D, $b_0$-$b_N$) applied at the input of the logic circuit and different function selection signal (R) values, the polarities of certain internal nodes of the logic circuit and/or the current consumption of the logic circuit are not identical.

**2.** Logic circuit according to claim 1, comprising:

- a logic block (15, 20) comprising N inputs (IN1', IN2') linked to the data inputs (IN1, IN2) of the logic circuit and M outputs (OUT') linked to the data outputs (OUT) of the logic circuit, the logic block being arranged to perform a first logic function (F1) or a second logic function (F2) according to the value of the function selection signal, and
- means (12-14, 21-25) for reversing the data applied to the logic block and for reversing the data delivered by the logic block, when the selection signal has a determined value (R=1).

**3.** Logic circuit according to one of claims 1 and 2, in which the means for reversing the data applied comprise EXCLUSIVE-OR gates that receive the function selection signal (R) at one input.

4. Logic circuit according to one of claims 1 to 3, comprising logic gates (10) performing the NAND function when the function selection signal has a first logic value (R=0) and the NOR function when the function selection signal has a second logic value (R=1).

5. Logic circuit according to one of claims 1 to 4, **characterised in that** it is linked to a random signal generator (RGEN) arranged to deliver a random function selection signal (R).

6. Logic circuit according to one of claims 1 to 5, comprising logic gates (10) each comprising :

   - a first group of transistors (1, TP4, TP5, TN4, TN5) arranged to perform a first logic gate function,
   - a second group of transistors (2, TP1, TP2, TN1, TN2) arranged to perform a second logic gate function, and
   - function selection means (SW1, SW2, SW3, TP3, TP6, TN3, TN6, INV1) arranged to receive the function selection signal (R) and to validate one or other of the two logic gate functions at the logic gate output according to the function selection signal value.

7. Logic circuit according to claim 6, in which the logic gate function selection means comprise transistors (TP3, TP6) arranged to short-circuit transistors (TP1, TP2, TP4, TP5) assigned to perform one or other of the two logic gate functions, according to the function selection signal (R) value.

8. Logic circuit according to claim 7, in which the logic gate function selection means comprise transistors (TN3, TN6) arranged to interrupt conductive paths passing via transistors (TN1, TN2, TN4, TN5) assigned to perform one or other of the two logic gate functions, according to the selection signal (R) value.

9. Logic circuit according to one of claims 6 to 8, in which the first logic gate function is the NAND function and the second logic gate function is the NOR function.

10. Logic circuit ($CRY_0$-$CRY_M$) according to one of claims 1 to 9, in which the logic function performed by the logic circuit is an encryption function.

11. Encryption circuit (CRYC), **characterised in that** it comprises a plurality of encryption blocks ($CRY_0$-$CRY_M$) each comprising a logic circuit according to claim 10.

12. Encryption circuit according to claim 11, linked to a random signal generator arranged to apply a random function selection signal to each encryption block the value of which is independent of the function selection signal applied to the other encryption blocks.

13. Secured integrated circuit, **characterised in that** it comprises a plurality of logic circuits according to one of claims 1 to 10, and means for applying a random-type function selection signal to the logic circuits the value of which is modified at random at least after each integrated circuit reset.

14. Integrated circuit (MP) according to claim 13, **characterised in that** it comprises a microprocessor central processing unit (CPU).

15. Integrated circuit according to one of claims 13 and 14, arranged on a portable support to form a smart card or any other equivalent portable electronic object.

16. Method for scrambling the operation of a logic circuit (15, 20, $CRY_0$-$CRY_M$) provided to perform a logic function (F1) with N data inputs and M data outputs, N being at least equal to 2 and M at least equal to 1, **characterised in that** it comprises steps of:

   - providing logic gates (10) and/or transistors (TP, TN) in the logic circuit arranged to perform the logic function in at least two different ways, the way in which the logic function is performed being determined by the value of a function selection signal (R) applied to the logic circuit,
   - applying a random function selection signal (R) to the logic circuit, and
   - refreshing the function selection signal at determined instants, so as to scramble the operation of the logic circuit.

17. Method according to claim 16, comprising steps of providing, in the logic circuit:

- a logic block (15, 20) comprising N inputs (IN1', IN2') linked to the data inputs (IN1, IN2) of the logic circuit and M outputs (OUT') linked to the data outputs (OUT) of the logic circuit, the logic block being arranged to perform a first logic function (F1) or a second logic function (F2) according to the function selection signal value, and
- logic gates (12-14, 21-25) arranged to reverse the data applied to the logic block and to reverse the data delivered by the logic block when the selection signal has a determined value (R=1).

18. Method according to claim 17, in which the logic block is achieved by means of logic gates (10) performing the NAND function when the function selection signal has a first logic value (R=0) and the NOR function when the function selection signal has a second logic value (R=1).

**Fig. 1**

**Fig. 2**

**Fig. 3**

**Fig. 4**

**Fig. 5A**

**Fig. 5B**

**Fig. 6A**

(R=0)

**Fig. 6B**

(R=1)

EP 1 346 508 B1

**Fig. 7**

**Fig. 8**